Europäisches Patentamt

European Patent Office

Office européen des brevets

(19)

(11) Publication number: **0 249 107 B1**

# EUROPEAN PATENT SPECIFICATION

(12)

(45) Date of publication of patent specification: **11.09.91**  (51) Int. Cl.⁵: **G21C 3/34**, G21C 3/32

(21) Application number: **87107812.7**

(22) Date of filing: **29.05.87**

(54) **Nuclear-reactor fuel assembly having a plurality of spacer grids.**

(30) Priority: **11.06.86 US 872988**

(43) Date of publication of application:
**16.12.87 Bulletin  87/51**

(45) Publication of the grant of the patent:
**11.09.91 Bulletin  91/37**

(84) Designated Contracting States:
**BE DE FR GB IT SE**

(56) References cited:
**FR-A- 2 130 409
FR-A- 2 337 918
GB-A- 1 501 870
US-A- 3 713 974**

(73) Proprietor: **WESTINGHOUSE ELECTRIC COR-
PORATION
Westinghouse Building Gateway Center
Pittsburgh Pennsylvania 15222(US)**

(72) Inventor: **Ferrari, Harry Max
144 West Swissvale Avenue
Pittsburgh Pennsylvania 15218(US)**
Inventor: **Roberts, Elwyn
220 West Chapel Ridge Road
Pittsburgh Pennsylvania 15238(US)**
Inventor: **Demario, Edmund Emory
2816 Orlando Drive
Pittsburgh Pennsylvania 15235(US)**

(74) Representative: **Patentanwälte Dipl.-Ing. R.
Holzer Dipl.-Ing. (FH) W. Gallo
Ludwigstrasse 26
W-8900 Augsburg(DE)**

## Description

The present invention relates generally to nuclear reactors and, more particularly, to a nuclear-reactor fuel assembly having a plurality of fuel-rod spacer grids.

As well known in the art, the function of spacer or support grids in a nuclear fuel assembly is to keep the fuel rods in the fuel assembly accurately spaced from one another and to laterally support them against vibration. Usually, spacer grids are fabricated from a plurality of metal straps interlaced and interlocked in an egg-grate-like manner so as to form open cells, most of them for receiving fuel rods (standard cells), and some for receiving control-rod guide thimbles (thimble cells). Each fuel rod received in and extending through a standard cell is laterally supported therein by detents protruding from strap portions forming the walls of the cell. Commonly, the detents are formed out of the material of the respective cell-defining strap portions, and comprise grid springs and relatively rigid dimples disposed to react with the grid springs. Fuel-rod spacer grids are disclosed in U.S. patent specifications Nos. 3389056, 3713971, 3944467, 4224107 and 4474730, for example.

Materials commonly used for making spacer grids are nickel-base alloys known as Inconel, and zirconium alloys known as Zircaloy. Inconel is strong and highly corrosion-resistant, and grid springs formed therefrom are relatively insensitive to irradiation-induced relaxation, which is to say, they will not lose their strength to any significant degree when exposed to the intense heat and radiation present in a nuclear reactor core. Zircaloy, on the other hand, has a lower neutron-parasitic cross-section, i.e. is less neutron-absorptive, than Inconel and therefore has gained favor as the grid material to be preferred from a standpoint of better fuel economy; but Zircaloy grid springs are more subject than Inconel springs to irradiation-induced relaxation and, during use thereof, tend to lose almost 30% of their strength initially, and up to nearly 90% of their remaining strength after one year of radiation exposure. Of course, such losses undesirably reduce the spring forces holding the fuel rods in their precise positions and against vibration.

As a compromise optimizing the benefits to be derived from using Inconel on the one hand (strength and relatively low susceptibility to irradiation-induced spring relaxation) and Zircaloy on the other (low neutron parasitic cross-section), it has been proposed to utilize Inconel grids as end grids and Zircaloy grids as intermediate grids. Such an arrangement combines the advantages of relatively high neutron economy as afforded by the Zircaloy intermediate grids employed in the main neutron-flux region of the reactor core, and of consistently firm fuel-rod support as provided by the springs in the Inconel end grids, namely, the lowermost or upstream (having regard to the direction of coolant flow) end grid where consistently strong spring forces are required in order to ensure that no fretting-wear-causing vibration will be induced in the fuel rods by the turbulent coolant flow normally existing near the inlet end of the fuel assembly, and the uppermost or downstream end grid which is located where the higher neutron-parasitic cross-section of Inconel has little effect upon neutron economy, namely, in the gas plenum area of the fuel rods which is outside the actual fuel region of the core.

Such "optimized" fuel assemblies employing Inconel end grids and Zircaloy intermediate grids have proved satisfactory. However, they have been found on occasion to be susceptible to fuel-rod bow due to the following conditions. The fuel-rod detents (springs and dimples) in each grid cell commonly are so located with respect to one another that their forces exerted upon a given fuel rod introduce therein a lateral bending moment. For as long as the grid springs of all spacer grids retain their ability to exert the force initially designed into them, they will ordinarily keep the fuel rods straight, even if the latter tend to axially grow as usually they do during use. However, as the grid springs lose some of their strength during use, and since the Zircaloy springs in the intermediate grids of an "optimized" fuel assembly do so to a much greater extent than the Inconel springs in the end grids, the springs in the end grids will continue to hold the axially growing fuel rods firmly enough to impede elongation thereof, thereby placing them in axial compression, whilst the more relaxed springs of the intermediate grids may become unable to hold the fuel rods straight against the action of the above-mentioned bending moments which now are further enhanced by the axial compression forces acting upon the fuel rods tending to grow. The consequence of these conditions is fuel rod bow which is highly undesirable because it results in a significant departure-from-nuclear-boiling heat transfer penalty and, if extensive enough to cause fuel rods to touch, in accelerated fuel-rod cladding corrosion.

It is the principal object of the invention to alleviate this problem, and the invention accordingly resides in a nuclear fuel assembly including a coolant-inlet end structure, a coolant-outlet end structure, and a plurality of transverse spacer grids disposed between the end structures and adapted to laterally support fuel rods in parallel spaced relationship with respect to each other, said spacer grids comprising a first end grid located nearer to the coolant-inlet end structure, a second end grid located nearer to the coolant-outlet end structure, and at least one intermediate grid located between said first and second end grids, each of said spacer grids including detents designed to engage the respective fuel rods and to apply to each of them a predetermined force for holding the fuel rod against vibration and lateral displacement thereof, characterized in that said predetermined force designed into the detents of said second end grid is less than said predetermined force designed into the detents of said first end grid, and is insufficient to prevent rectilinear elongation of the respective fuel rods upon axial growth thereof.

This arrangement which, in accordance with the invention, ensures that fuel rods can rectilinearly elongate during axial growth thereof avoids their being placed in axial compression to a degree subjecting the fuel rods to bending moments strong enough to overcome the forces applied by the detents of the intermediate grids in seeking to hold the fuel rods straight. Therefore, and since, in addition, designing lesser detent forces into said second end grid of the fuel assembly also reduces the bending moments inherently induced in fuel rods when detents act thereon in opposition at points axially spaced apart, fuel-rod bow is unlikely to occur even if lateral support of the fuel rods is diminished in the intermediate grid or grids due to irradiation-induced relaxation of the grid detents, especially grid springs.

It will be appreciated, then, that the invention alleviates the problem of fuel-rod bow in fuel assemblies, including fuel assemblies of the "optimized" kind mentioned above, and that it does so without impairing the ability of the detents in the end grid near the coolant-inlet end structure of the fuel assembly to hold the fuel rods firmly against vibration induced by turbulence and cross-flow of the coolant entering the fuel assembly.

A preferred embodiment of the invention will now be described, by way of example only, with reference to the accompanying drawings, in which:-

Figure 1 is an elevational view of a nuclear fuel assembly shown in longitudinally foreshortened form;

Fig. 2 is an isometric partial view of one of the spacer grids of the fuel assembly illustrated in Fig. 1;

Fig. 3a is a diagram of forces typically acting upon a fuel rod in a conventional fuel assembly; and

Fig. 3b is a diagram of forces acting upon a fuel rod in a fuel assembly embodying the invention.

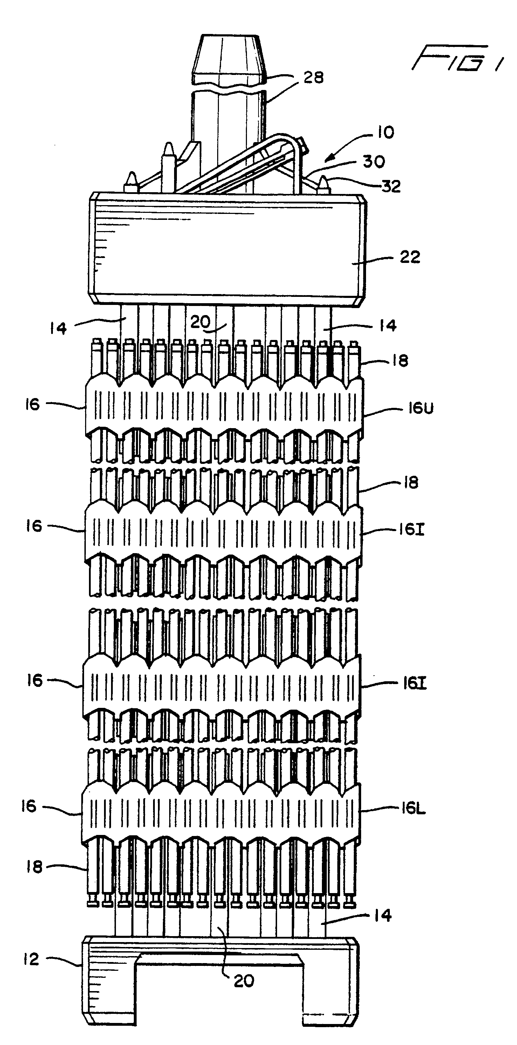

Referring now particularly to Fig. 1, the fuel assembly illustrated therein and generally designated with reference numeral 10 is adapted for use in a pressurized water reactor and basically of conventional construction. The fuel assembly 10 comprises a coolant-inlet end structure or bottom nozzle 12 for supporting the assembly in the core region of a nuclear reactor (not shown); control-rod guide tubes or thimbles 14 attached to the bottom nozzle 12 and extending upwards therefrom; transverse fuel-rod spacer grids 16 which are axially spaced along, and attached to, the guide thimbles 14 and adapted to laterally space and support nuclear-fuel rods 18 in an organized array; an instrumentation tube 20 extending through the center of the fuel assembly 10; and a coolant-outlet end structure or top nozzle 22 attached to the upper ends of the guide thimbles 14 so as integrate the various parts into a unitary assembly. Supported in the top nozzle 22 is a conventional rod-cluster control mechanism 28 which includes radial flukes 30 connected to the upper ends of control rods 32, and which is operable so as to vertically move the control rods in the guide thimbbles 14, as well known in the art.

The spacer grids 16 can be classified as divided into three superadjacent categories, namely, a lower or upstream end grid 16L, one or more intermediate grids 16I, and an upper or downstream end grid 16U, the terms "upstream" and "downstream", as employed herein, having regard to the direction of coolant flow through the fuel assembly when in use.

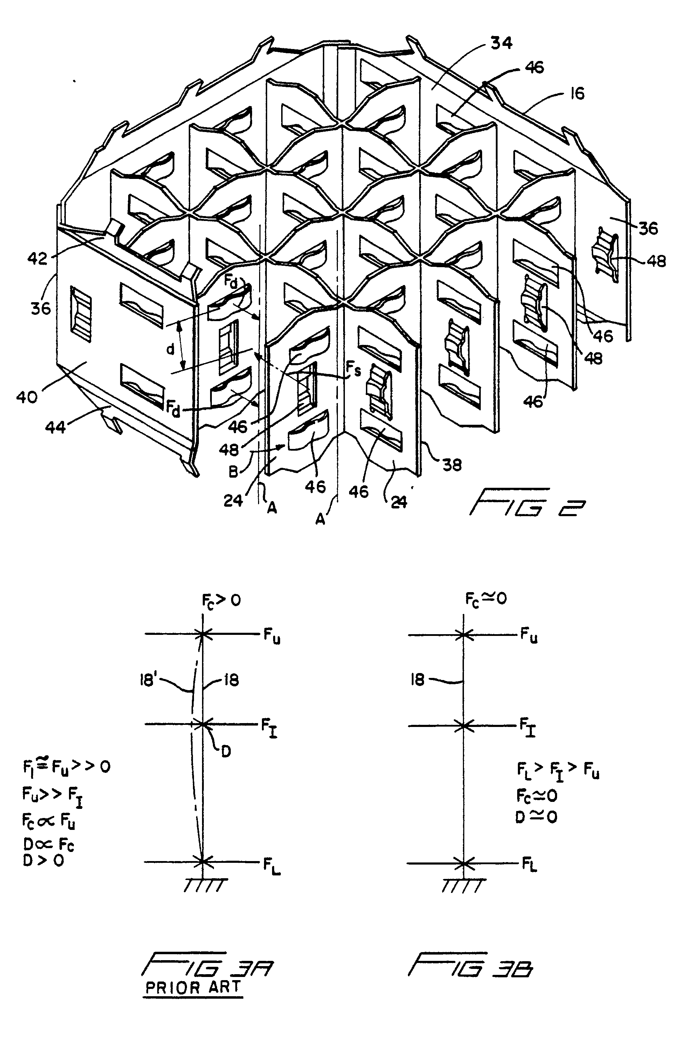

Turning now to Fig. 2 of the drawings, the spacer grid 16 partially illustrated therein is composed of a plurality of inner straps 24 arranged in an egg-crate-like manner to form open cells 34 each adapted to receive one of the fuel rods 18 shown in Fig. 1, and outer or peripheral straps 36 interconnected at their terminal ends and having connected thereto the terminal ends of the inner straps 24. As shown in Fig. 2, the outer straps 36 are of greater height than the inner straps, each of them having a main or intermediate portion 40 and resilient upper and lower border portions 42 and 44, respectively. The upper or downstream border portions 42 may be provided with coolant mixing vanes, as well known in the art.

Each of the fuel-rod receiving cells 34 has associated therewith at least two pairs of oppositely disposed fuel-rod supporting detents, namely, a first pair of detents disposed on two of the four walls of the cell, and a second pair of detents disposed on the remaining two cell walls, and with all of the detents projecting from the respective cell walls toward the longitudinal axis or centerline (as indicated at A in Fig. 2) of the cell. In the illustrated embodiment, there are six fuel-rod supporting detents per cell 34, namely, two pairs of relatively rigid dimples 46 disposed on two adjoining cell walls and with the dimples of each pair spaced apart in the direction of the longitudinal axis A of the cell, and two grid springs 28 each disposed on one of the two remaining cell walls and adapted to engage a fuel rod, when received in the associated cell, at a level intermediate the two dimples on the opposite cell wall.

In the preferred embodiment illustrated herein, and as seen from Fig. 2, the dimples 46 are open to coolant flowing through the respective cells, i.e. they are facing the coolant flow edgewise, and the grid springs 48 are oriented so as to have their edges extend generally in parallel to the coolant-flow through the cells. Preferably, the dimples 46 and springs 48 are formed out of the respective grid straps, and each of them has a fuel-rod supporting surface which is contoured to cradle the fuel rod received in the associated grid cell 34, as disclosed fully in Applicant's European Patent Publication No. 0 196 598. From the following description of the present invention, however, it will be appreciated that the invention per se is applicable as well to fuel assemblies having spacer grids with different designs and orientations of grid springs and dimples.

Each of the spacer grids 16 is fabricated from a material selected according to the most predominant functional concerns pertaining to the particular location at which the grid is intended to be utilized on a fuel assembly. Thus, any spacer grid intended for use on an intermediate portion of the fuel assembly, namely, at a location between the lowermost and uppermost end grids, should be made of a material having as low a neutron-absorption cross-section as possible in order to avoid undue parasitic absorption of neutrons. Accordingly, the spacer grids 16I of the illustrated fuel assembly preferably are made of Zircaloy material which is known for its relatively low neutron-absorption cross-section, and even though grid springs of Zircaloy grids are susceptible to irradiation-induced spring relaxation.

Because there is considerable turbulence and cross-flow of coolant in the lower portion of the fuel assembly 10, it is important that the lowermost grid or upstream end grid 16L be made of a material which is less susceptible to irradiation-induced spring relaxation and, therefore, is capable of maintaining a relatively high spring force on the fuel rods 18 throughout the useful life of the fuel assembly 10. Such a material is Inconel which, therefore, is the preferred material from which to make the lowermost grid 16L, even though it has a higher neutron-absorption cross-section than Zircaloy, a consideration of less concern than spring force at the lowermost grid location.

The material with the superior ability to maintain a high spring force, i.e. Inconel, preferably is used also for the uppermost or downstream end grid 16U which is located at the same general level as the gas-plenum portions of the fuel rods 18 and, therefore, is at the upper fringe of the main neutron-flux region where the parasitic effect of a higher neutron-absorption cross-section is of relatively little concern.

When a fuel rod 18 is located in a cell 34 of a newly formed grid 16, the grid springs 48 and dimples 46 combine to produce an interference fit with the exterior of the rod 18 extending through the cell 34, thereby to support the fuel rod 18 laterally within the cell 34 to frictionally restrain it against axial movement. Because the dimples 46 acting in opposition to the springs 48 and are axially offset from the latter by a distance d (Figure 2), there is created a bending moment (arrow B) which tends to deflect the fuel rod 18. More specifically, each grid spring exerts a spring force $F_s$ perpendicular to the cell axis A, whereas the dimples 46 produce a dimple force $F_d$ in opposition to the spring force but applied to the fuel rod at respective locations above and below the point of application of the spring force $F_s$ Thus, a bending moment B is induced in the rod which is equal to the various forces times the separation d therebetween. This bending moment B alone does not result in objectionable bowing of the fuel rod except when combined with axial compression of the fuel rod coupled with radiation-induced relaxation of the grid springs 48 and dimples 46 in the intermediate grids 16I causing the lateral fuel-rod support to be diminished.

In this context, it is known that a fuel rod 18 tends to grow axially during use thereof in a reactor core. Such growth, if restrained, aggravates bowing of the rod 18, as illustrated in Figure 3A depicting the forces resulting from axial growth in a typical prior-art arrangement, and wherein $F_L$, $F_I$, and $F_U$ represent the resulting spring and dimple forces acting upon the fuel rod 18 at the respective lower, intermediate and upper grids. When a conventional fuel assembly 10 is initially fabricated, the forces at all grid locations are generally uniform. However, as the fuel rod ages and the various grids 16 are subjected to high radiation, the spring and dimple forces change permanently. (Changes resulting from high temperature may be ignored for purposes of this explanation, although compensation therefor may be made.) After a selected time period (e.g., one year), the spring forces $F_I$ of the intermediate grid or grids 16I are diminished and become considerably less than each of the lower and upper spring forces $F_L$ and $F_U$ which remain essentially constant. Thus, as the fuel rod 18 tends to grow axially. the frictional forces acting thereon at the upper and lower grid locations 16U and 16L resist elongation of the fuel rod tending to grow, thereby placing it in axial compression. The resultant compressive force $F_C$ axially acting on the fuel rod 18 amplifies the above-mentioned bending moment B, thereby causing the rod to bow or bend laterally against the diminished lateral spring force $F_I$ of the intermediate grids 16I, as indicated at 18'. The bow or deflection D may be sufficient to cause the rod 18 to touch an adjacent fuel rod.

Figure 3B shows a similar force diagram but one obtained when utilizing the invention. In accordance with the latter, the springs and dimples in the various grids are designed such that the as-fabricated lower force $F_L$ is greater than the intermediate force $F_I$ which, in turn, preferably is greater than the upper force $F_U$

4

at the top of the rod 18. Again, the forces acting on the fuel rod 18 will change after a given time interval (e.g., one year), but because the upper force $F_U$ was initially chosen to be sufficiently less than the lower force $F_L$ to permit fuel rod elongation due to axial growth, little, if any, compressive force is produced on the rod 18 as a result of axial growth. Accordingly, there is essentially no augmentation of any bending moment resulting from the offset nature of the springs 48 and dimples 46. Furthermore, and even though the intermediate spring force $F_I$ on the fuel rod 18 decreases due to radiation-induced spring relaxation, it is still sufficient to hold the fuel rod 18 against objectionable bow because the tendency of the fuel rod 18 to bow is much reduced as compared to the prior arrangement of Figure 3A, owing to the ability of the fuel rod to rectilinearly elongate during axial growth thereof.

The following Table I shows various ranges and preferred values of spring forces as designed into grids embodying the invention, and as they exist after one year of use.

## TABLE I

| Grid | Spring Force | As Fabricated Range/kg. | As Fabricated Preferred Values/kg. | After One Year/kg. |
|------|--------------|-------------------------|-----------------------------------|--------------------|
| 16U  | $F_U$        | .5-2                    | 1.5                               | 1.4                |
| 16I  | $F_I$        | 1.5-6                   | 5.0                               | 0.5                |
| 16L  | $F_L$        | 2-6                     | 3.5                               | 2.5                |

Table II below shows the values of a typical prior-art arrangement in which the spring force in each of the grid elements is listed as fabricated and as existing after one year:

## TABLE II

| Spring Force | As Fabricated Values/kg. | After One Year/kg. |
|--------------|--------------------------|--------------------|
| $F_U$        | 3.5                      | 3.4                |
| $F_I$        | 3.5                      | 0.35               |
| $F_L$        | 3.5                      | 2.5                |

It is seen that, in the prior art, all the as-fabricated spring forces are about the same, e.g., 3.5 kg. However, after one year, the upper spring force is greater than the lower spring force and much greater than the intermediate spring force, which differences result in bowing. In the embodiment of the invention, the springs of the Zircaloy grids likewise relax during use but since the upper grid 16U initially has a smaller spring force designed into it, it will allow each fuel rod to elongate rectilinearly as it axially grows so that there is little, if any, enhancement of the bending moments on the fuel rods and of their tendency to bow.

## Claims

1. A nuclear fuel assembly including a coolant-inlet end structure (12), a coolant-outlet end structure (22), and a plurality of transverse spacer grids (16) disposed between the end structures (12,22) and adapted to laterally support fuel rods (18) in parallel spaced relationship with respect to each other, said spacer grids comprising a first end grid (16L) located nearer to the coolant-inlet end structure (12), a second end grid (16U) located nearer to the coolant-outlet end structure (22), and at least one intermediate grid (16I) located between said first and second end grids, each of said spacer grids including detents (46,48) designed to engage the respective fuel rods and to apply to each of them a predetermined force for holding the fuel rod against vibration and lateral displacement thereof, characterized in that said predetermined force designed into the detents (46,48) of said second end grid (16U) is less than said predetermined force designed into the detents (46,48) of said first end grid (16L), and is insufficient to prevent rectilinear elongation of the respective fuel rods (18) upon axial growth thereof.

2. A nuclear fuel assembly according to claim 1, characterized in that said forces designed into the detents (46,48) of said second end grid (16U) are less than the forces designed into the detents of said or each intermediate grid (16I).

3. A nuclear fuel assembly according to claim 1 or 2, characterized in that said force designed into the detents (46,48) of said second end grid (16U) is substantially within the range of from 0.5 to 2.0 kg.

4. A nuclear fuel assembly according to claim 3, characterized in that said force designed into the detents of said second end grid (16U) is substantially 1.5 kg.

5. A nuclear fuel assembly according to any one of the preceding claims, characterized in that said force designed into the detents (46,48) of said first end grid (16L) is substantially within the range of from 2.0 to 6.0 kg.

6. A nuclear fuel assembly according to claim 5, characterized in that said force designed into the detents of said first end grid (16L) is substantially 3.5 kg.

7. A nuclear fuel assembly according to any one of the preceding claims, characterized in that said or each intermediate grid (16I) consists of a material having a lower neutron-absorption cross-section and higher susceptibility to radiation-induced relaxation than the material of said first and second end grids (16L, 16U).

8. A nuclear fuel assembly according to any one of the preceding claims, characterized in that said or each intermediate grid (16I) consists of Zircaloy.

9. A nuclear fuel assembly according to claim 7 or 8, characterized in that said first and second end grids (16L, 16U) consist of Inconel.

10. A nuclear fuel assembly according to claim 7, 8 or 9, characterized in that said force designed into the detents (46,48) of said or each intermediate grid (16I) is substantially within the range of from 1.5 to 6.0 kg.

11. A nuclear fuel assembly according to claim 10, characterized in that said force designed into the detents of said or each intermediate grid (16I) is substantially 5 kg.

**Revendications**

1. Assemblage combustible nucléaire comprenant une structure (12) d'extrémité d'entrée de réfrigérant, une structure (22) d'extrémité de sortie de réfrigérant, et une pluralité de grilles transversales (16) d'espacement disposées entre les structures (12, 22) d'extrémité et prévues pour maintenir latéralement des barres (18) de combustible de manière à les espacer parallèlement les unes par rapport aux autres, ces grilles d'espacement comprenant une première grille (16L) d'extrémité située plus près de la structure (12) d'extrémité d'entrée de réfrigérant, une deuxième grille (16U) d'extrémité située plus près de la structure (22) d'extrémité de sortie de réfrigérant, et au moins une grille intermédiaire (16I) située entre ces première et deuxième grilles d'extrémité, chacune de ces grilles d'espacement comprenant des organes d'appui (46, 48) conçus pour être en contact avec les barres respectives de combustible et pour appliquer à chacune d'elles une force prédéterminée destinée à maintenir la barre de combustible afin de l'empêcher de vibrer et de se déplacer latéralement, caractérisé en ce que la force prédéterminée prévue dans les organes d'appui (46, 48) de la deuxième grille (16U) d'extrémité est inférieure à la force prédéterminée prévue dans les organes d'appui (46, 48) de la première grille (16L) d'extrémité, et est insuffisante pour empêcher l'allongement rectiligne des barres respectives (18) de combustible lors de leur grandissement axial.

2. Assemblage combustible nucléaire suivant la revendication 1, caractérisé en ce que les forces prévues dans les organes d'appui (46, 48) de la deuxième grille (16U) d'extrémité sont inférieures aux forces prévues dans les organes d'appui de la ou de chaque grille intermédiaire (16I).

3. Assemblage combustible nucléaire suivant la revendication 1 ou 2, caractérisé en ce que la force prévue dans les organes d'appui (46. 48) de la deuxième grille (16U) d'extrémité est sensiblement comprise dans la plage de 0.5 à 2 kg.

4. Assemblage combustible nucléaire suivant la revendication 3, caractérisé en ce que la force prévue dans les organes d'appui de la deuxième grille (16U) d'extrémité est sensiblement égale à 1,5 kg.

5. Assemblage combustible nucléaire suivant l'une quelconque des revendications précédentes, caractérisé en ce que la force prévue dans les organes d'appui (46. 48) de la première grille (16L) d'extrémité est sensiblement comprise dans la plage de 2 à 6 kg.

6. Assemblage combustible nucléaire suivant la revendication 5. caractérisé en ce que la force prévue dans les organes d'appui de la première grille (16L) d'extrémité est sensiblement égale à 3,5 kg.

7. Assemblage combustible nucléaire suivant l'une quelconque des revendications précédentes, caractérisé en ce que la ou chaque grille intermédiaire (16I) est constituée d'un matériau présentant une section efficace d'absorption des neutrons qui est plus petite et une sensibilité à la relaxation par irradiation qui est plus grande que le matériau des première et deuxième grilles (16L, 16U) d'extrémité.

8. Assemblage combustible nucléaire suivant l'une quelconque des revendications précédentes, caractérisé en ce que la ou chaque grille intermédiaire (16I) est constituée en "Zircaloy".

9. Assemblage combustible nucléaire suivant la revendication 7 ou 8, caractérisé en ce que la première et la deuxième grilles (16L, 16U) d'extrémité sont constituées en "Inconel".

10. Assemblage combustible nucléaire suivant la revendication 7, 8 ou 9, caractérisé en ce que la force prévue dans les organes d'appui (46, 48) de la ou de chaque grille intermédiaire (16I) est sensiblement comprise dans la plage de 1,5 à 6 kg.

11. Assemblage combustible nucléaire suivant la revendication 10, caractérisé en ce que la force prévue dans les organes d'appui de la ou de chaque grille intermédiaire (16I) est sensiblement égale à 5 kg.

## Patentansprüche

1. Brennelement mit einem Kühlmitteleintritts-Endstück (12), einem Kühlmittelaustritts-Endstück (22) und mehreren zwischen den Endstücken (12, 22) angeordneten, quer verlaufenden Abstandshaltegittern (16) zum seitlichen Halten von Brennstäben (18) mit Abstand voneinander und parallel zueinander, wobei die Abstandshaltegitter ein erstes, näher am Kühlmitteleintritts-Endstück (12) angeordnetes Endgitter (16L), ein zweites, näher am Kühlmittelaustritts-Endstück (22) angeordnetes Endgitter (16U) und mindestens ein zwischen dem ersten und dem zweiten Endgitter angeordnetes Zwischengitter (16I) aufweisen, wobei jedes der Abstandshaltegitter Feststellvorrichtungen (46, 48) aufweist, welche zum Anlegen an die entsprechenden Brennstäbe und zum Ausüben einer bestimmten Kraft auf jeden der Stäbe vorgesehen sind, um die Brennstäbe gegen Vibration und seitliche Verschiebung derselben zu halten, dadurch gekennzeichnet, daß die für die Feststellvorrichtungen (46, 48) des zweiten Endgitters (16U) vorgesehene, vorbestimmte Kraft kleiner als die für die Feststellvorrichtungen (46, 48) des ersten Endgitters (16L) vorgesehene, vorbestimmte Kraft und nicht ausreichend dafür ist, eine lineare Verlängerung des entsprechenden Brennstabs (18) bei dessen Axialexpansion zu verhindern.

2. Kernbrennelement nach Anspruch 1, dadurch gekennzeichnet, daß die für die Feststellvorrichtungen (46, 48) des zweiten Endgitters (16U) vorgesehenen Kräfte kleiner sind als die für die Feststellvorrichtungen des bzw. jedes Zwischengitters (16I) vorgesehenen Kräfte.

3. Kernbrennelement nach Anspruch 1 oder 2, dadurch gekennzeichnet, daß die für die Feststellvorrichtungen (46, 48) des zweiten Endgitters (16U) vorgesehene Kraft etwa innerhalb des Bereichs von 0,5 bis 2,0 kg liegt.

4. Kernbrennelement nach Anspruch 3, dadurch gekennzeichnet, daß die für die Feststellvorrichtungen des zweiten Endgitters (16U) vorgesehene Kraft etwa 1,5 kg beträgt.

5. Kernbrennelement nach einem der vorstehenden Ansprüche, dadurch gekennzeichnet, dar die für die Feststellvorrichtungen (46, 48) des ersten Endgitters (16L) vorgesehene Kraft etwa innerhalb des Bereiches von 2,0 bis 6,0 kg liegt.

6. Kernbrennelement nach Anspruch 5, dadurch gekennzeichnet, daß die für die Feststellvorrichtungen des ersten Endgitters (16L) vorgesehene Kraft etwa 3,5 kg beträgt.

7. Kernbrennelement nach einem der vorstehenden Ansprüche, dadurch gekennzeichnet, daß das bzw. jedes Zwischengitter (16I) aus einem Material mit niedrigerem Neutronenabsorptionsquerschnitt und höherer Anfälligkeit für strahlungsinduzierte Entspannung besteht als das Material des ersten und zweiten Endgitters (16L, 16U).

8. Kernbrennelement nach einem der vorstehenden Ansprüche, dadurch gekennzeichnet, daß das bzw. jedes Zwischengitter (16I) aus Zirkaloy besteht.

9. Kernbrennelement nach Anspruch 7 oder 8, dadurch gekennzeichnet, daß das erste und zweite Endgitter (16L, 16U) aus Inconel besteht.

10. Kernbrennelement nach Anspruch 7, 8 oder 9, dadurch gekennzeichnet, daß die für die Feststellvorrichtungen (46, 48) des bzw. jedes Zwischengitters (16I) vorgesehene Kraft etwa im Bereich von 1,5 bis 6,0 kg liegt.

11. Kernbrennelement nach Anspruch 10, dadurch gekennzeichnet, daß die für die Feststellvorrichtungen des bzw. jedes Zwischengitters (16I) vorgesehene Kraft etwa 5 kg beträgt.

FIG 1

FIG 2

$F_c > 0$

$F_u$

18'  18

$F_I$

D

$F_I \cong F_u >> 0$

$F_u >> F_I$

$F_c \propto F_u$

$D \propto F_c$

$D > 0$

$F_L$

FIG 3A

PRIOR ART

$F_c \cong 0$

$F_u$

18

$F_I$

$F_L > F_I > F_u$

$F_c \cong 0$

$D \cong 0$

$F_L$

FIG 3B